# EUROPEAN PATENT APPLICATION

(11) **EP 4 767 903 A1**
(43) Date of publication of application: **01.07.2026**
(21) Application number: 24857820.5
(22) Date of filing: 06.05.2024
(51) Int. Cl.: A47L 11/40, A47L 9/28

(54) **CLEANING BASE STATION**

(30) Priority: 25.08.2023 CN 202322318564 U
(71) Applicant: Beijing Roborock Technology Co., Ltd., Beijing 102206 (CN)
(72) Inventor: CHE, Yingying, Beijing 102206 (CN)
(74) Representative: Cabinet Beau de Loménie
(86) International application number: PCT/CN2024/091235
(87) International publication number: WO 2025/044270

(57) **Abstract**

The present disclosure provides a cleaning base station, comprising a station body, a power supply cover and a power supply board, wherein the power supply cover is arranged on the station body, so that the power supply cover and the station body define an accommodating space, and the power supply board is arranged in the accommodating space. The power supply cover is arranged on the station body, so that the power supply cover and the station body can define an accommodating space; and the power supply board is arranged in the accommodating space, so that the power supply board can be effectively protected while the stable installation of the power supply board is ensured. When the power supply board is installed, the power supply board only needs to be placed at a corresponding position of the station body, and the power supply cover covers the station body, so that the power supply board is located in the accommodating space defined by the station body and the power supply cover, the installation is simple and convenient, independent power supply modules do not need to be assembled firstly, and the assembly process is reduced. During manufacturing, injection molding is only carried out on the power supply cover, the injection molding process of an upper shell or a lower shell is reduced, a mold used for injection molding is omitted, and the manufacturing cost of the cleaning base station is reduced.

## Description

### CROSS-REFERENCE TO RELATED APPLICATION

The present disclosure claims priority to Chinese Patent Application No. 202322318564.7 filed on August 25, 2023, which is incorporated herein by reference in its entirety as a part of the present disclosure.

### TECHNICAL FIELD

The present disclosure relates to the technical field of cleaning devices, and in particular, to a cleaning base station.

### BACKGROUND ART

With the advancement of science and technology, automatic cleaning devices have become one of the necessary electrical appliances for home life. The cleaning base station provides maintenance for automatic cleaning devices, such as charging, dust collection, water replenishment, and mop cleaning.

However, the power supply assembly in the existing cleaning base stations is independent of the station body. The power supply assembly usually includes an upper housing and a lower housing, the upper housing and the lower housing are joined together, and a power supply board is disposed between the upper housing and the lower housing. That is, the existing power supply assemblies require separate assembly first, and then assembled to the station body after the assembly is completed. This process involves multiple assembly steps and is time-consuming and labor-intensive.

### SUMMARY OF THE INVENTION

Therefore, the technical problem to be solved by the present disclosure is to provide a cleaning base station, which can simplify the assembly operation of the power supply assembly.

In order to solve the above problem, the present disclosure provides a cleaning base station. The cleaning base station includes a station body, a power supply cover, and a power supply board. The power supply cover is disposed on the station body, such that the power supply cover and the station body are enclosed to define an accommodating space, and the power supply board is disposed in the accommodating space.

In some embodiments, the power supply cover is detachably connected to a side wall of the station body.

In some embodiments, a mounting base is disposed on the station body, and the power supply cover is snap-fitted with the mounting base to define the accommodating space.

In some embodiments, the station body includes a water tank support, a fixing portion is disposed on a side wall of the water tank support, and the power supply cover is detachably connected to the fixing portion.

In some embodiments, an insulating member is disposed between the power supply board and the station body.

In some embodiments, a projection of the power supply board on a plane where the insulating member is located is within a range of the insulating member.

In some embodiments, a wiring hole is formed in the power supply cover and/or the station body, and the wiring hole is in communication with the accommodating space.

In some embodiments, a sealing member is disposed in the wiring hole, and a wire passing channel is formed in the sealing member.

In some embodiments, the sealing member is made of an insulating material.

In some embodiments, a plug-in base is disposed on the station body or the power supply cover, and the plug-in base is configured to be connected to the power supply board.

In some embodiments, the accommodating space includes a first chamber and a second chamber, the first chamber is in communication with the second chamber, the power supply board is disposed in the first chamber, at least a portion of the plug-in base is disposed in the second chamber, and a blocking member is disposed between the first chamber and the second chamber.

In some embodiments, when the insulating member is disposed between the power supply board and the station body, a portion of the insulating member located in the second chamber includes a bottom plate and a side plate, the bottom plate is disposed on an outer wall of the station body, and the side plate is disposed on a chamber side wall of the second chamber.

### Beneficial effects

The embodiments of the present disclosure above provide a cleaning base station. By means of disposing the power supply cover on the station body, the power supply cover and the station body can be enclosed to define an accommodating space, and then the power supply board can be disposed in the accommodating space, which provides a mounting position for the power supply board, and can also provide an effective protection for the power supply board while ensuring the stable mounting of the power supply board. When the power supply board is mounted, it is only necessary to place the power supply board at a corresponding position of the station body and cover the station body with the power supply cover, such that the power supply board is located in the accommodating space defined by enclosing the station body and the power supply cover. The mounting is simple and convenient, without the need to assemble an independent power supply assembly in advance, thereby reducing the assembly process. Moreover, only the power supply cover needs to be injection-molded during manufacturing. Compared with the prior art in which the upper housing and the lower housing of the power supply assembly need to be injection-molded, this design eliminates the injection molding process of the upper housing or the lower housing, and also omits the mold used for injection molding, thereby reducing the manufacturing cost of the cleaning base station.

### BRIEF DESCRIPTION OF THE DRAWINGS

FIG. 1 is a schematic exploded structural diagram of a cleaning base station according to one embodiment of the present disclosure;
FIG. 2 is a schematic three-dimensional structural diagram of a cleaning base station according to one embodiment of the present disclosure; and
FIG. 3 is a schematic three-dimensional structural diagram of a station body and a power supply board of a cleaning base station according to one embodiment of the present disclosure.

The reference numerals are indicated as:
1 station body; 2 power supply cover; 3 power supply board; 4 insulating member; 41 bottom plate; 42 side plate; 5 wiring hole; 6 sealing member; 7 plug-in base; 8 first chamber; 9 second chamber; and 10 blocking member.

### DETAILED DESCRIPTION

In the description of the present disclosure, it should be understood that orientational or positional relationships indicated by terms "central", "longitudinal", "transverse", "length", "width", "thickness", "upper", "lower", "front", "rear", "left", "right", "vertical", "horizontal", "top", "bottom", "inner", "outer", "clockwise", "counterclockwise", etc., are those shown on the basis of the drawings, and are merely intended to describe the present disclosure and simplify the description rather than to indicate or imply that the indicated apparatus or element must have a specific orientation and be configured and operated according to the specific orientation. Such relationships should not be construed as limiting the present disclosure.

In addition, the terms "first" and "second" are used herein for descriptive purposes only and should not be construed as indicating or implying relative importance or implicitly indicating the number of technical features described. Thus, features defined by "first" and "second" may explicitly or implicitly include one or more of the features. In the description of the present disclosure, unless otherwise clearly and specifically defined, "plurality" refers to two or more.

In the present disclosure, unless otherwise clearly specified and defined, the terms "mount", "interconnect", "connect", and "fix" should be understood in their broad sense. For example, they may be fixed connection, detachable connection, or integrated connection; or mechanical connection or electric connection; or direct connection, indirect connection via an intermediate, or internal communication between two elements. For those of ordinary skill in the art, the specific meanings of the above terms in the present disclosure can be understood according to specific conditions.

The preferred embodiments of the present disclosure are described below with reference to the drawings. It should be understood that the preferred embodiments described herein are merely intended to illustrate and explain the present disclosure and do not limit the present disclosure.

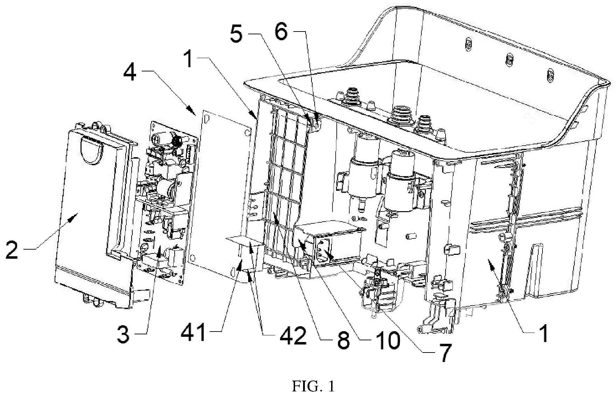

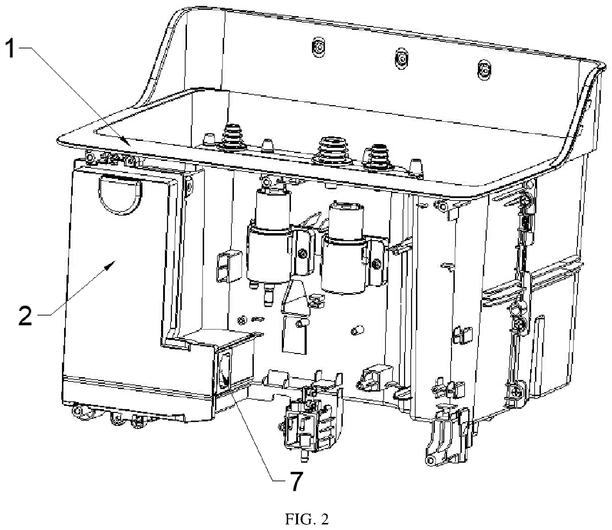

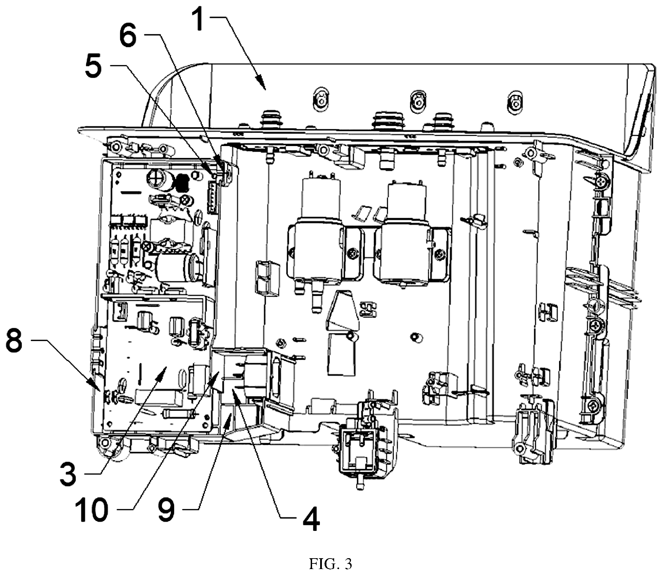

Referring to FIGs. 1 to 3, a cleaning base station is provided according to one embodiment of the present disclosure. The cleaning base station includes a station body 1, a power supply cover 2, and a power supply board 3. The power supply cover 2 is disposed on the station body 1, such that the power supply cover 2 and the station body 1 are enclosed to define an accommodating space, and the power supply board 3 is disposed in the accommodating space.

By means of disposing the power supply cover 2 on the station body 1, the power supply cover 2 and the station body 1 can be enclosed to define an accommodating space, and then the power supply board 3 can be disposed in the accommodating space, which provides a mounting position for the power supply board 3, and can also provide effective protection for the power supply board 3 while ensuring the stable mounting of the power supply board 3. When the power supply board 3 is mounted, it is only necessary to place the power supply board 3 at a corresponding position of the station body 1 and cover the station body 1 with the power supply cover 2, such that the power supply board 3 is located in the accommodating space defined by enclosing the station body 1 and the power supply cover 2. The mounting is simple and convenient, without the need to assemble an independent power supply assembly in advance, thereby reducing the assembly process. Moreover, only the power supply cover 2 needs to be injection-molded during manufacturing. Compared with the prior art in which the upper housing and the lower housing of the power supply assembly need to be injection-molded, this design eliminates the injection molding process of the upper housing or the lower housing, and also omits the mold used for injection molding, thereby reducing the manufacturing cost of the cleaning base station.

In this embodiment, the cleaning device using the cleaning base station may include an automatic cleaning device such as a sweeping robot. During use, the cleaning base station is configured to perform operations such as charging, dust collection, water replenishment, and mop cleaning on the mobile cleaning apparatus.

The power supply board 3 may be configured to convert a 220V alternating current power into a direct current power suitable for the mobile cleaning apparatus. Certainly, the power supply board 3 may also be used for other functions. This is not limited in this embodiment.

At least a portion of the accommodating space is adapted in shape to the power supply board 3, such that the power supply board 3 can be stably disposed in the accommodating space, and the power supply board 3 does not occupy excessive space.

Specifically, the power supply board 3 may be substantially of a plate-shaped structure, and at least a portion of the accommodating space is adapted in shape to the power supply board 3 and is slightly larger in size than the power supply board 3.

At least a portion of the power supply cover 2 is adapted in shape to the power supply board 3, and is slightly larger in size than the power supply board 3, such that the power supply board 3 is snap-fitted as a whole, which provides effective protection for the power supply board 3 while ensuring the stable mounting of the power supply board 3.

The power supply cover 2 is detachably connected to a side wall of the station body 1, which facilitates the assembly operation and also makes the wiring and cabling of the power supply board 3 more convenient.

The power supply cover 2 may be connected to the side wall of the station body 1 by detachable connection methods such as snap-fit and screw connection.

A mounting base is disposed on the station body 1, and the power supply cover 2 is snap-fitted with the mounting base to define the accommodating space, such that the power supply cover 2 can be more stably disposed on the station body 1, and the power supply board 3 is fixed in the accommodating space.

The mounting base includes a base wall disposed on an outer wall of the station body 1. The base wall and the outer wall of the station body 1 are substantially enclosed to form a box structure with a side away from the outer wall of the station body 1 open. The power supply board 3 may be assembled into the mounting base through the open side, and the power supply cover 2 covers the open side to form the accommodating space.

The base wall is perpendicularly disposed on the outer wall of the station body 1, such that the base wall and the outer wall of the station body 1 are substantially enclosed to form a rectangular hollow mounting base with a side away from the outer wall of the station body 1 open.

The station body 1 includes a water tank support, a fixing portion is disposed on a side wall of the water tank support, and the power supply cover 2 is detachably connected to the fixing portion. By means of disposing the fixing portion, a stable connection between the power supply cover 2 and the water tank support can be ensured.

The fixing portion may be understood as a portion of the mounting base. The power supply cover 2 is snap-fitted onto the mounting base, and the power supply cover 2 is fixedly connected to the mounting base through the fixing portion.

When the power supply cover 2 is fixed to the water tank support through a snap-fit, the fixing portion is a snap. When the power supply cover 2 is fixed to the water tank support through a screw, the fixing portion is a threaded hole.

Specifically, in this embodiment, taking the power supply cover 2 being connected to the side wall of the water tank support through a screw as an example, a through hole is formed on the power supply cover 2, a threaded hole corresponding to the through hole is formed on the side wall of the water tank support, and the screw passes through the through hole of the power supply cover 2 and is threadedly connected to the threaded hole of the side wall of the water tank support.

More specifically, the power supply cover 2 is substantially of a rectangular plate structure, and the through holes are provided at four corners of the power supply cover 2.

Via holes corresponding to the screws are formed in the power supply board 3, and the screws pass through the via holes in the power supply board 3, which can play a role in positioning and fixing the power supply board 3.

In this embodiment, four screws, four through holes in the power supply cover 2, four threaded holes in the side wall of the water tank support, and four via holes in the power supply board 3 are provided.

An insulating member 4 is disposed between the power supply board 3 and the station body 1. By means of disposing the insulating member 4 between the power supply board 3 and the station body 1, the insulating member 4 and the power cover can cooperate with each other to form a space for shielding a power spark, thereby ensuring good use safety.

The insulating member 4 may be of a plate-shaped structure, which can reduce space occupation while ensuring a good insulation effect.

The insulating member 4 may be a polyester insulating plate.

At least a portion of the insulating member 4 is adapted in shape to the power supply board 3 and the accommodating space, such that the insulating member 4 can play a good role in insulating and isolating the entire power supply board 3.

The insulating member 4 is also adapted in shape to the internal space of the mounting base, such that the insulating member 4 can be stably fixed in the mounting base.

A rib is disposed on a bottom surface in the mounting base, and the insulating member 4 is disposed on the rib.

A projection of the power supply board 3 on a plane where the insulating member 4 is located is within a range of the insulating member 4, that is, the power supply board 3 is adapted in shape to at least a portion of the insulating member 4, and the power supply board 3 is smaller in size than the insulating member 4, so as to ensure that the insulating member 4 can play a good role in insulating the entire power supply board 3.

The power supply board 3 is disposed opposite to the insulating member 4, the insulating member 4 is substantially of a plate-shaped structure, the insulating member 4 is parallel to the power supply board 3, and the projection of the power supply board 3 on the plane where the insulating member 4 is located is completely on the insulating member 4.

A wiring hole 5 is formed in the power supply cover 2 and/or the station body 1, and the wiring hole 5 is in communication with the accommodating space. By means of forming the wiring hole 5, the wire passing operation during the mounting of the power supply board 3 is facilitated, and the wire can also be fixed to ensure good stability.

The wiring hole 5 may be formed in the power supply cover 2 as a whole, or may be formed in the station body 1 as a whole. Alternatively, a portion of the wiring hole may be formed in the power supply cover 2, and the other portion may be formed in the station body 1. Alternatively, a semicircular through hole may be formed in the station body 1, and a semicircular through hole is correspondingly formed in the power supply cover 2. When the power supply cover 2 is connected to the station body 1, the two semicircular through holes are mated to form a circular wiring hole 5.

One or at least two wiring holes 5 may be provided, and the wiring hole 5 may be disposed according to a wire outgoing position required by the power supply board 3.

A sealing member 6 is disposed in the wiring hole 5, and a wire passing channel is formed in the sealing member 6. By means of disposing the sealing member 6 in the wiring hole 5, the wiring hole 5 can be sealed to prevent external water or other impurities from entering the accommodating space, thereby playing a good role in protecting the power supply board 3. By means of forming the wire passing channel in the sealing member 6, the wire can pass through the wire passing channel to achieve wire outgoing.

The sealing member 6 may be made of an elastic material, and the diameter of the wire passing channel is slightly smaller than the outer diameter of the wire, such that the sealing member 6 is tightly sleeved on the outer peripheral wall of the wire, thereby ensuring a good sealing effect.

The sealing member 6 may be arranged in one-to-one correspondence with the wiring hole 5, that is, one sealing member 6 is arranged in each wiring hole 5.

The outer diameter of the sealing member 6 matches the inner diameter of the wiring hole 5 to ensure a good sealing effect.

The sealing member 6 is made of an insulating material, which can ensure a good insulation effect.

The sealing member 6 may be made of a soft silicone material.

A plug-in base 7 is disposed on the station body 1 or the power supply cover 2, and the plug-in base 7 is configured to be connected to the power supply board 3.

A mounting hole may be formed in the station body 1 or the power supply cover 2, and the plug-in base 7 is disposed in the mounting hole.

Specifically, in this embodiment, a mounting hole is formed in a base wall of the mounting base, and the plug-in base 7 is disposed in the mounting hole.

The hole wall of the mounting hole abuts against the outer wall of the plug-in base 7, thereby ensuring a good sealing effect.

The plug-in base 7 can be used for inserting an external plug to achieve power supply.

The accommodating space includes a first chamber 8 and a second chamber 9, the first chamber 8 is in communication with the second chamber 9, the power supply board 3 is disposed in the first chamber 8, at least a portion of the plug-in base 7 is disposed in the second chamber 9, and a blocking member 10 is disposed between the first chamber 8 and the second chamber 9.

By means of disposing the first chamber 8 and the second chamber 9, separate mounting of the power supply board 3 and a plug connector can be realized, thereby facilitating disassembly and assembly operations of the power supply board 3 and the plug connector. A blocking member 10 is disposed between the first chamber 8 and the second chamber 9, which can play a blocking role when a phenomenon such as sparking occurs at the plug connector, to prevent sparks from damaging the power supply board 3.

An integral structure formed by the first chamber 8 and the second chamber 9 is substantially L-shaped.

The blocking member 10 may be of a plate-shaped structure, and the blocking member 10 is disposed perpendicular to an outer wall of the station body 1.

The blocking member 10 is disposed opposite to the plug-in base 7.

The blocking member 10 may also be formed by extending the base wall of the mounting base.

The first chamber 8 and the second chamber 9 are enclosed by the mounting base and the power supply cover 2.

A connection end of the plug-in base 7 to be connected with the external connecting wire passes through the second chamber 9 in a direction away from the first chamber 8.

A portion of the insulating member 4 located in the second chamber 9 includes a bottom plate 41 and a side plate 42, the bottom plate 41 is disposed on an outer wall of the station body 1, and the side plate 42 is disposed on a chamber side wall of the second chamber 9, thereby further improving the insulation effect in the second chamber 9.

Two side plates 42 may be provided. The side plates 42 are disposed on both sides of the bottom plate 41, respectively, and the two side plates 42 and the bottom plate 41 form a U-shaped structure.

The two side plates 42 are disposed on two opposite side walls of the second chamber 9, respectively.

The bottom plate 41 is attached to a vertical outer wall of the station body 1, and side walls of the chamber are perpendicularly disposed on the vertical outer wall of the station body 1. That is, the side walls of the chamber are horizontally disposed. The two side plates 42 are attached to two opposite inner side walls of the second chamber 9, respectively.

The cleaning device may be a sweeping robot, and the cleaning base station may be a base station of the sweeping robot.

It can be easily understood by those skilled in the art that the above embodiments can be freely combined and superimposed on the premise of no conflict.

The above descriptions are only preferred embodiments of the present disclosure and are not intended to limit the present disclosure. Any modifications, equivalents, improvements, and the like that are made within the spirit and principle of the present disclosure shall be included in the protection scope of the present disclosure. The above descriptions are only preferred embodiments of the present disclosure. It should be noted that for those of ordinary skill in the art, several improvements and modifications can be made without departing from the technical principles of the present disclosure, and these improvements and modifications shall also be deemed as falling within the protection scope of the present disclosure.

## Claims

1. A cleaning base station, comprising a station body (1), a power supply cover (2), and a power supply board (3), wherein the power supply cover (2) is disposed on the station body (1) such that the power supply cover (2) and the station body (1) are enclosed to define an accommodating space, and the power supply board (3) is disposed in the accommodating space.

2. The cleaning base station according to claim 1, wherein the power supply cover (2) is detachably connected to a side wall of the station body (1).

3. The cleaning base station according to claim 1 or 2, wherein a mounting base is disposed on the station body (1), and the power supply cover (2) is snap-fitted with the mounting base to define the accommodating space.

4. The cleaning base station according to any one of claims 1 to 3, wherein the station body (1) comprises a water tank support, a fixing portion is disposed on a side wall of the water tank support, and the power supply cover (2) is detachably connected to the fixing portion.

5. The cleaning base station according to any one of claims 1 to 4, wherein an insulating member (4) is disposed between the power supply board (3) and the station body (1).

6. The cleaning base station according to claim 5, wherein a projection of the power supply board (3) on a plane where the insulating member (4) is located is within a range of the insulating member (4).

7. The cleaning base station according to any one of claims 1 to 6, wherein a wiring hole (5) is formed in the power supply cover (2) and/or the station body (1), and the wiring hole (5) is in communication with the accommodating space.

8. The cleaning base station according to claim 7, wherein a sealing member (6) is disposed in the wiring hole (5), and a wire passing channel is formed in the sealing member (6).

9. The cleaning base station according to claim 8, wherein the sealing member (6) is made of an insulating material.

10. The cleaning base station according to any one of claims 1 to 9, wherein a plug-in base (7) is disposed on the station body (1) or the power supply cover (2), and the plug-in base (7) is configured to be connected to the power supply board (3).

11. The cleaning base station according to claim 10, wherein the accommodating space comprises a first chamber (8) and a second chamber (9), the first chamber (8) is in communication with the second chamber (9), the power supply board (3) is disposed in the first chamber (8), at least a portion of the plug-in base (7) is disposed in the second chamber (9), and a blocking member (10) is disposed between the first chamber (8) and the second chamber (9).

12. The cleaning base station according to claim 11, wherein when the insulating member (4) is disposed between the power supply board (3) and the station body (1), a portion of the insulating member (4) located in the second chamber (9) comprises a bottom plate (41) and a side plate (42), the bottom plate (41) is disposed on an outer wall of the station body (1), and the side plate (42) is disposed on a chamber side wall of the second chamber (9).
